Europäisches Patentamt

European Patent Office

Office européen des brevets

(11) Publication number: 0 261 876
A2

# EUROPEAN PATENT APPLICATION

(21) Application number: 87308236.6

(22) Date of filing: 17.09.87

(51) Int. Cl.⁴: H04J 15/00

(30) Priority: 26.09.86 US 912784

(43) Date of publication of application:
30.03.88 Bulletin 88/13

(84) Designated Contracting States:
BE DE ES FR GB IT NL SE

(71) Applicant: AMERICAN TELEPHONE AND
TELEGRAPH COMPANY
550 Madison Avenue
New York, NY 10022(US)

(72) Inventor: Chraplyvy, Andrew Roman
25 Colonial Drive
Matawan New Jersey 07747(US)
Inventor: Kogelnik, Herwig Werner
27 North Ward Avenue
Rumson New Jersey 07760(US)
Inventor: Li, Tingye
11 Sheraton Lane
Rumson New Jersey 07760(US)
Inventor: Tkach, Robert Wiliam
171 Pinckney Road
Little Silver New Jersey 07739(US)

(74) Representative: Watts, Christopher Malcolm
Kelway, Dr. et al
Western Electric Company Limited 5,
Mornington Road
Woodford Green Essex, IG8 0TU(GB)

(54) Narrowband tunable optical receiver.

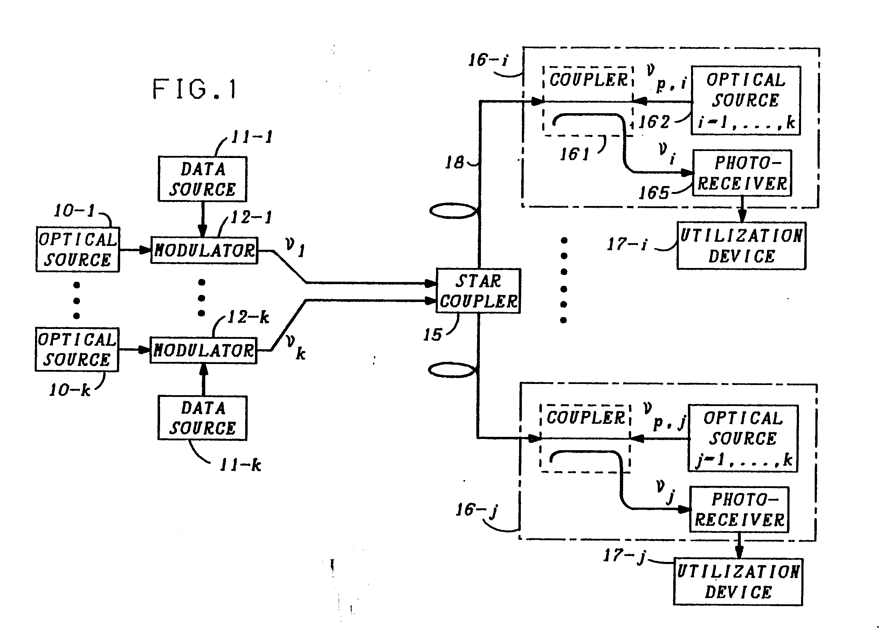

(57) Stimulated Brillouin scattering of optical signals is employed to provide narrowband tunable reception of a selected optical signal from a plurality of optical signals by using an optical pump source (162) at the receiver (16-i) for launching an optical signal ($\nu_{p,i}$)propagating in a direction opposite to the plurality of optical signals ($\nu_1...\nu_k$)to provide stimulated Brillouin amplification of the selected optical signal ($\nu_i$)at the receiver. The frequency for the optical pump source is separated from the frequency for the selected optical signal by the appropriate Brillouin-Stokes shift for the transmission medium. By tuning the frequency of the optical pump source at the receiver in increments equal to the frequency separation of adjacent optical signals in the plurality of optical signals, it is possible to amplify any single desired optical signal from a plurality of adjacent optical signals (FIG. 1).

FIG. 1

## NARROWBAND TUNABLE OPTICAL RECEIVER

### Technical Field

This invention relates to the field of optical communication system devices and, more particularly, to optical receivers.

### Background of the Invention

In optical communication systems, coherent system architectures have been favored over others. To a certain degree, this choice has resulted from the ability or inability of the optical system components to deal with such system characteristics as optical fiber dispersion, optical source instabilities, and phonon scattering effects (Raman and Brillouin scattering). Moreover, the coherent system architecture has required trade-off of desirable features such as low bit-rate signalling and direct detection of received optical signals.

In coherent optical communication systems, nonlinear processes such as phonon scattering (Raman and Brillouin) corrupt the received optical signal and, as a result, degrade overall system performance. To deal effectively with phonon scattering and, thereby, realize an effective communication system, it has been suggested that the phonon scattering process be eliminated or significantly suppressed. For example, D. Cotter in U.S. Patent 4,560,246 has stated that stimulated Brillouin scattering has the following detrimental effects on transmitted optical signals: it attenuates the transmitted power; it causes multiple frequency shifts of the transmitted signal; it causes increased backward coupling of light into the optical source; and, for sufficiently high launched powers, it may cause physical damage to the optical fiber. From such a recitation of detrimental effects from stimulated Brillouin scattering, it has been concluded by Cotter that stimulated Brillouin scattering must be eliminated or significantly suppressed in optical communication systems.

### Summary of the Invention

In accordance with the principles of the present invention, stimulated Brillouin scattering of optical signals is turned to an advantage to provide narrowband tunable reception of a selected optical signal from a plurality of optical signals by employing an optical pump source at the receiver for launching an optical signal propagating in a direction opposite to the plurality of optical signals to provide stimulated Brillouin amplification of the selected optical signal at the receiver. The frequency for the optical pump source is separated from the frequency for the selected optical signal by the appropriate Brillouin-Stokes shift for the transmission medium.

By tuning the frequency of the optical pump source at the receiver in increments equal to the frequency separation of adjacent optical signals in the plurality of optical signals, it is possible to amplify and demultiplex any single desired optical signal from a plurality of adjacent optical signals.

In addition to providing a narrowband, high amplification of the selected optical signal or channel, embodiments of the invention provide a simple alternative to coherent systems by permitting the use of direct detection of the selected optical signal. Accordingly, optical communication systems based on embodiments of the present invention present far few restrictions on optical source linewidths, data bit rates, and polarization of the optical signals than competing, alternative systems.

### Brief Description of the Drawing

A more complete understanding of the invention may be obtained by reading the following description of a specific illustrative embodiment of the invention in conjunction with the appended drawing in which:

FIG. 1 is a block diagram of an exemplary optical communication system including an optical receiver embodying the present invention, and

FIG. 2 illustrates a representative amplitude spectrum for the optical signals in the receiver of FIG. 1.

### Detailed Description

In the present invention, stimulated Brillouin amplification is employed by the receiver in an optical communication systems to provide tunable narrowband discrimination among a plurality of received optical signals and tunable narrowband amplification of a single desired optical signal from the plurality of received optical signals. As a result, an optical receiver utilizing the principles of this invention permits the use of simpler detection and demultiplexing techniques in the optical communication system. Additionally, this type of optical receiver allows a more dense packing of optical signals or communication channels in wavelength-division multiplexed (WDM) systems while maintaining ease and simplicity of demultiplexing.

Several conventions used in this description require some elaboration before proceeding. The first convention concerns the optical information signal denoted $\nu_i$. This notation conveniently connotes a unique information signal which is related to the optical frequency $\nu_i$. Hence, the term $\nu_i$ shall be taken to signify an optical signal spanning a range of optical frequencies around the optical frequency $\nu_i$ which comprise the optical information signal $\nu_i$. The relationship between the optical frequency $\nu_i$ and the range of optical frequencies comprising the optical signal $\nu_i$ depends upon the modulation technique employed at the transmission site and will be described in more detail below.

The second convention concerns the optical pump signal $\nu_{p,i}$. In general, the optical pump signal is comprised of a substantially single frequency component at the optical frequency $\nu_{p,i}$ related to the optical frequency $\nu_i$ in optical information signal $\nu_i$. However, it should be clear to those skilled in the art that the optical pump signal can also be comprised of a plurality of frequency components around a center frequency $\nu_{p,i}$ generated, for example, by dithering the center frequency component $\nu_{p,i}$ over a continuous, narrow range.

In order to understand the embodiment of the invention more completely, it is important to describe stimulated Brillouin amplification. Stimulated Brillouin amplification is a nonlinear phonon scattering process. Under the proper set of conditions, stimulated Brillouin amplification occurs in most materials and, in particular, optical fibers. In this process, one optical signal amplifies a counter-propagating optical signal of slightly lower optical frequency.

By way of example, assume that an optical information signal $\nu_i$ and an optical pump signal $\nu_{p,i}$ are counter-propagating in the same optical transmission medium. Stimulated Brillouin amplification of the optical information signal will occur for the condition that $\nu_i = \nu_{p,i}(1-2nV/c)$, where n is the refractive index of the transmission medium, V is the acoustic velocity in the transmission medium, c is the speed of light in vacuum, and $\nu_i$ and $\nu_{p,i}$ are optical frequencies. For a transmission medium of typical single mode silica fiber, the refractive index n is approximately 1.45 and the acoustic velocity in the fiber V is approximately $6.0 \times 10^5$ cm/sec. Using the formula given above, it is possible to calculate the frequency separation between the optical pump signal and the optical information signal of interest. This separation between the frequency of the optical pump signal and the frequency of the optical information signal is called the Brillouin-Stokes shift. The Brillouin-Stokes shift in single-mode silica fibers should be approximately 11 GHz. at a transmission wavelength around 1.5 $\mu$m. and approximately 20 GHz. at a transmission wavelength around 0.8 $\mu$m.

Under the proper conditions for the occurrence of stimulated Brillouin amplification, the optical information signal $\nu_i$ is amplified by a large amount related to the power of the optical pump signal $\nu_{p,i}$ and other factors while the remaining plurality of optical information signals at frequencies other than $\nu_i$ are unaffected by the Brillouin amplification process.

Amplification by the stimulated Brillouin process is confined to a narrow range of frequencies called the Brillouin linewidth or amplification bandwidth. For single-mode silica optical fiber transmission media, the amplification bandwidth is approximately 15 - 20 MHz. at a transmission wavelength of 1.5 $\mu$m. and approximately 80 MHz. at a transmission wavelength of 0.8 $\mu$m. The amplification bandwidth can be increased by any number of methods such as by dithering the frequency of the optical pump signal or by introducing a variation of germania doping in the core of the optical fiber.

For the embodiment of the invention shown in FIG. 1, there is shown an optical communication system in which a plurality of input data signals are modulated into optical information signals, multiplexed together, and transmitted over optical transmission media to a plurality of optical receivers. Each optical receiver is capable of selecting and amplifying one optical information signal from the plurality of transmitted optical information signals by employing stimulated Brillouin amplification in accordance with the principles of this invention.

Data transmission is initiated in the first transmitter by combining an optical signal from optical source 10-1 with information from data source 11-1 in modulator 12-1 to form optical information signal $\nu_i$. Similarly, data transmission is initiated in each of the remaining k-1 transmitters.

In an example from experimental practice, optical sources 10-1 through 10-k are semiconductor lasers such as external cavity InGaAsP lasers operating around 1.5 $\mu$m.. Modulators 12-1 through 12-k are external modulators such as electrooptic (LiNbO$_3$) waveguide modulators. While external modulation is shown in FIG. 1, it will be apparent to those skilled in the art that direct modulation of the optical source by the data source is a possible alternative approach.

Most standards forms of modulation are suitable for optical transmission systems incorporating the invention. Modulation techniques such as amplitude modulation, frequency-shift-keying modulation and the like are desirable because they permit the use of direct detection of the data from the selected optical information signal at the optical receiver. Other forms of modulation are possible but may not lend the optical information signal easily to direct detection at the optical receiver.

Selection of a modulation technique depends on several factors such as the amplification bandwidth of the optical receiver and the type of detection (direct or coherent) performed by the optical receiver. For direct detection at the optical receiver, the modulation technique selected for use in the optical communication system should be capable of maintaining the bandwidth of each optical information signal $\nu_i$ within the amplification bandwidth of the optical receiver.

In the embodiment of the invention shown in FIG. 1, the optical information signals $\nu_i$ through $\nu_k$ are passively combined in star coupler 15. Star coupler 15 is implemented as a passive device which combines input signals from M input ports and distributes the group of combined input signals to N output ports. When the optical information signals from the k different transmitters are combined in star coupler 15, a group of optical information signals $\nu_i$ through $\nu_k$ are distributed to optical receivers 16-i through 16-j.

It should be clear to those skilled in the art that adjacent optical information signals, $\nu_i$ and $\nu_{i+1}$ for $i = 1,....,k-1$, are preferably separated by a nominal guard space to prevent overlap of the signals and thereby reduce interchannel interference. The width of the guard space and the channel-to-channel spacing from one optical information signal to another are dependent upon a plurality of factors including: wavelength of each optical source 10-1 through 10-k; the bandwidth of each optical information signal as determined from both the bit rate of the data and the modulation technique selected for modulators 12-1 through 12-k; and the amplification bandwidth of the optical receiver.

Coupler 15 is connected to each optical receiver by an optical transmission medium such as optical transmission medium 18 between coupler 15 and optical receiver 16-i. As will become apparent below, the optical transmission medium provides the environment for stimulated Brillouin amplification to occur. The optical transmission media connecting each optical receiver with the coupler is realizable as an optical fiber (single-mode, multimode, polarization-preserving or the like) or a semiconductor waveguide or a dielectric waveguide (lithium niobate or lithium tantalate) or the like.

The length of the optical transmission medium between the coupler and each receiver is chosen to exceed a predetermined minimum length related to the loss characteristic of the transmission medium. By employing an optical transmission medium of proper length between the coupler and each optical receiver, the stimulated Brillouin process initiated at each optical receiver is effectively optimized. For a description of determining the length of a silica-based optical fiber as employed in the present application, it is useful to review R.H.Stolen, Proc. of IEEE, Vol. 68, No. 10, pp.1232-6 (1980).

For the embodiment of the invention shown in FIG. 1, each optical receiver 16-i through 16-j is comprised of a directional coupler, an optical source, and a photo-receiver. While all optical information signals, $\nu_i$ through $\nu_k$, are present in the optical transmission medium connected to the input of the optical receiver, the output from the optical receiver is a signal representing the amplified portion of the selected optical information signal. For a direct detection system, the output from the receiver will generally represent the unmodulated data signal which, in modulated form, comprised the selected optical information signal. For a coherent detection system, the output from the optical receiver may be the carrier portion alone or the carrier and information portions of the selected optical information signal. The output signal from each optical receiver is supplied to a utilization device for further processing, demodulation, decoding or the like.

The operation of each optical receiver shown in FIG. 1 is better understood by describing the details of a single, exemplary optical receiver, namely optical receiver 16-i, wherein the alphabetic descriptor i indicates the particular optical information signal from the plurality of signals to which the optical receiver is tuned to select. Optical receiver 16-i is tuned by optical source 162 to amplify and, thereby, select only one optical information signal, signal $\nu_i$, from the plurality of optical information signals $\nu_i$ through $\nu_k$ supplied by optical transmission medium 18 to directional coupler 161. Optical source 162 generates the optical pump signal $\nu_{p,i}$ which is separated from the frequency of the desired optical information signal $\nu_i$ by the Brillouin-Stokes shift described above. The optical pump signal is supplied to coupler 161 and is caused to counter-propagate in the coupler 161 as well as in the optical transmission medium 18 with respect to the plurality of optical information signals.

In accordance with the operation of the optical receiver 16-i, optical information signal $\nu_i$ is amplified to a level significantly higher than the received level of the remaining optical information signals of the plurality of optical information signals. Optical information signals including the Stimulated Brillouin amplified optical information signal are tapped from coupler 161 in the forward direction, that is, the same direction as the plurality of optical information signals.

The output of coupler 161 is supplied to photo-receiver 163. Photo-receiver 163 is realized as a simple photodetector or p-i-n receiver or the like. Photo-receiver 163 selects optical information signal $\nu_i$ for output from the optical receiver 16-i to utilization device 17-i.

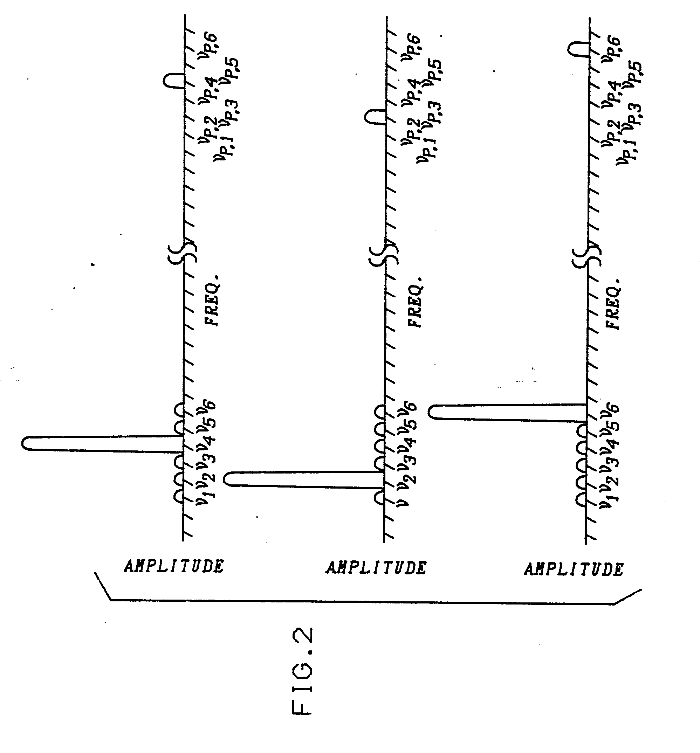

FIG. 2 depicts three possible, yet different, situations for the optical receivers in the optical transmission systems of FIG. 1. It is assumed in FIG. 2 that the amplification bandwidth is approximately equal to the information bandwidth of the optical information signals.

Each plot in FIG. 2 shows stimulated Brillouin amplification of a different one of the plurality of optical information signals. In the first (top) plot, optical pump signal $\nu_{p,4}$ amplifies only optical information signal $\nu_4$. In the second (middle) plot, optical pump signal $\nu_{p,2}$ amplifies only optical information signal $\nu_2$. Similarly, in the third (bottom) plot, optical pump signal $\nu_{p,6}$ amplifies optical information signal $\nu_6$. The three situations described above and in FIG. 2 can be understood to occur in three different optical receivers 16 or, at different time instants, in a single receiver whose optical pump source is tuned sequentially to the three different pump frequencies shown.

In order to understand the principles of this invention more fully, several additional examples from experimental practice are presented below

For a direct detection of amplitude modulated optical information signals, it is preferable to have $\nu_i$ and $\nu_{p,i}$ separated by the Brillouin-Stokes shift so that the stimulated Brillouin amplification envelope (the band of frequencies over which stimulated Brillouin amplification occurs for a given set of conditions) is substantially centered about frequency $\nu_i$ for the selected optical information signal.

For direct detection of frequency-shift-keyed optical information signals, it is preferable to separate $\nu_{p,i}$ by the Brillouin-Stokes shift from only one of the optical frequencies used in the FSK modulation. Accordingly, the resulting receiver can perform single filter FSK demodulation by amplifying only the signal related to the first modulation frequency which is inside the amplification bandwidth while ignoring the signal related to the second modulation frequency which is outside the amplification bandwidth.

Although it has not been discussed in detail, it should be obvious to those skilled in the art that the power of the optical pump signal will affect the gain of the stimulated Brillouin amplification. For example, in a system operating at 1.52 μm. over silica-based, single mode fiber and employing a single frequency color center laser as the optical pump source, an optical gain of approximately 20 dB to 25 dB is achievable with less than 15 mW of pump power.

In another example from experimental practice, the narrowband tunable optical receiver described above has been measured to be error-free in a direct detection mode on amplitude modulated data at 45 Mbps at approximately 1.52 μm. over a silica-based, single mode optical fiber transmission medium wherein the separation from $\nu_i$ to $\nu_{i+1}$ was greater than 140 MHz. It should be noted that a nonuniform germania concentration in the optical fiber broadened the amplification bandwidth from 20 MHz. to 100 MHz. Similar error-free measurements were made for data at 6.3 Mbps over a slightly different optical fiber (amplification bandwidth less than 50 MHz.) with a separation between adjacent optical information signals of 70 MHz.

## Claims

1. An optical receiver for use in a multiuser optical communication system capable of transmitting a plurality of optical information signals each signal associated on a one-to-one basis with a separate frequency of a corresponding plurality of separate frequencies, said optical receiver comprised of means for generating an optical pump signal at a predetermined frequency related to the frequency of a single predetermined optical information signal and means for combining the plurality of optical information signals with the optical pump signal to select said single predetermined optical information signal from the plurality of optical information signals by producing an amplified representation of said predetermined optical information signal by stimulated Brillouin amplification, the optical pump signal being combined with the plurality of optical information signals to interact and propagate in opposite directions with respect to each other.

2. The optical receiver as defined in claim 1 wherein the combining means further includes an optical transmission medium having at least a predetermined length for supporting propagation of the plurality of optical information signals and the optical pump signal.

3. The optical receiver as defined in claim 2 wherein the optical transmission medium is comprised of optical fiber.

4. The optical receiver as defined in claim 2 wherein the combining means further includes first coupling means connected jointly between the optical transmission medium and the optical pump signal generating means for causing the optical pump signal to propagate in the optical transmission medium in a direction opposite to the plurality of optical information signals.

5. The optical receiver as defined in claim 4 wherein the combining means further includes second coupling means for extracting the amplified representation of the single predetermined optical information signal from the optical transmission medium.

6. The optical receiver as defined in claim 5 wherein the combining means further includes a photoreceiver connected to said second coupling means for detecting the amplified representation of the single predetermined optical information signal.

7. The optical receiver as defined in claim 1 wherein the frequency optical pump signal being related to the frequency of the single predetermined optical information signal as $\nu_i = \nu_{p,i}(1-2nV/c)$, where n is the refractive index of the optical transmission medium, V is the acoustic velocity in the optical transmission medium, c is the speed of light in vacuum, $\nu_i$ is the frequency with which the single predetermined optical information signal is associated, and $\nu_{p,i}$ is the frequency of the optical pump signal.

8. The optical receiver as defined in claim 7 wherein the combining means further includes an optical transmission medium having at least a predetermined length for supporting propagation of the plurality of optical information signals and the optical pump signal.

9. The optical receiver as defined in claim 8 wherein the optical transmission medium is comprised of optical fiber.

10. The optical receiver as defined in claim 8 wherein the combining means further includes first coupling means connected jointly between the optical transmission medium and the optical pump signal generating means for causing the optical pump signal to propagate in the optical transmission medium in a direction opposite to the plurality of optical information signals.

11. The optical receiver as defined in claim 10 wherein the combining means further includes second coupling means for extracting the amplified representation of the single predetermined optical information signal from the optical transmission medium.

12. The optical receiver as defined in claim 11 wherein the combining means further includes a photoreceiver connected to said second coupling means for detecting the amplified representation of single predetermined optical information signal.

FIG.1

FIG.2